# EUROPÄISCHE PATENTSCHRIFT

(11) **EP 2 404 059 B1**
(45) Veröffentlichungstag und Bekanntmachung des Hinweises auf die Patenterteilung: **23.10.2013**
(21) Anmeldenummer: 10712892.8
(22) Anmeldetag: 02.03.2010
(51) Int. Cl.: F03D 9/00, G01H 1/08

(54) **VERFAHREN ZUM ÜBERWACHEN VON WINDTURBINEN**
METHOD FOR MONITORING WIND TURBINES
PROCÉDÉ DE SURVEILLANCE D'ÉOLIENNES

(30) Priorität: 02.03.2009 EP 09002955
(43) Veröffentlichungstag der Anmeldung: 11.01.2012
(73) Patentinhaber: Suzlon Energy GmbH, 18055 Rostock (DE)
(72) Erfinder: WINKELMANN, Jörg, 18029 Wardow (DE); HUHN, Martin, 18059 Pölchow (DE)
(86) Internationale Anmeldenummer: PCT/EP2010/001278
(87) Internationale Veröffentlichungsnummer: WO 2010/099928

(56) Entgegenhaltungen:
- EP-A1- 2 072 975
- EP-A2- 1 975 589
- US-A1- 2004 230 377

## Beschreibung

Die Erfindung betrifft ein Verfahren zur Überwachung wenigstens einer Windturbine, eine Vorrichtung und ein System zur Überwachung wenigstens einer Windturbine.

Für das wirtschaftliche Betreiben von Windturbinen beziehungsweise von Windparks ist es wichtig, Defekte und Brüche in den Rotorblättern der Windturbinen zu einem möglichst frühen Zeitpunkt feststellen zu können. Nur durch eine rechtzeitige Erkennung von Defekten ist es möglich, notwendige Reparaturkosten gering zu halten sowie Folgeschäden zu vermeiden.

Eine Möglichkeit, Defekte und Brüche in den Rotorblättern festzustellen besteht darin, durch häufige, visuelle Kontrolle vor Ort den Zustand der Rotorblätter zu überwachen.

Solche visuellen Kontrollen sind jedoch kostenintensiv und aus diesem Grunde unerwünscht. Da defekte beziehungsweise gebrochene Rotorblätter im Betriebszustand Vibrationen innerhalb des Rotorblattes hervorrufen, sind aus dem Stand der Technik bereits Verfahren bekannt, mit denen der Zustand eines Rotorblattes automatisch überprüft werden kann.

Derartige Verfahren müssen in der Lage sein, Vibrationen, deren Ursache auf Rotorblatt-Schäden zurückzuführen ist, von solchen Vibrationen zu unterscheiden, welche von Getriebegeräuschen, Pitch-Geräuschen und anderen Geräuschemissionen in den Windturbinen herrühren.

Um dies zu bewerkstelligen, werden meist komplizierte Algorithmen in den aus dem Stand der Technik bekannten Verfahren verwendet.

So beschreibt DE 100 65 314 B4 ein Verfahren zur Überwachung des Zustandes von Rotorblättern an Windkraftanlagen. Hierbei werden zunächst die Messwerte in elektrische Signale überführt, einer Spektren-Analyse unterzogen und anschließend mit einer Spektrenbibliothek eines Massendatenspeichers verglichen. Bei Übereinstimmung von solchen Spektrenmustern der Spektrenbibliothek, welche defekte Rotorblätter kennzeichnen mit dem Spektrum des zu überwachenden Rotorblattes, wird ein Schadenssignal ausgegeben.

Ebenso beschreibt US 2010/00 21297 A1 ein Verfahren zur Detektion von Beschädigungen in einem Rotorblatt, wobei hier die Messwerte eines Rotorblattes mit einem weiteren Rotorblatt der gleichen Windturbine verglichen werden um mit Hilfe einer Differenz der Messwerte eine mögliche Beschädigung eines Rotorblattes erkennen zu können.

Da die aus dem Stand der Technik bekannten Verfahren aufwändige Rechenoperationen umfassen, werden zu ihrer Durchführung meist kosten- und störanfällige Computer benötigt. Außerdem ist oft eine Bibliothek von Vergleichsdaten notwendig, um die Algorithmen der aus dem Stand der Technik verwendeten Verfahren durchführen zu können.

Ziel der Erfindung besteht darin, ein Verfahren zur Detektion von Rotorblatt-Schäden bereitzustellen, welches in einer einfachen, kostengünstigen und wenig störanfälligen Hardwarevorrichtung realisiert werden kann. Aufgabe ist zudem, ein weiteres Verfahren zur Detektion von Rotorblatt-Schäden bereit zu stellen.

Diese Aufgabe wird durch ein Verfahren mit den Verfahrensschritten gemäß Anspruch 1 der Patentanmeldung und durch eine Vorrichtung und ein System zur Überwachung von Windturbinen gemäß der Ansprüche 12 bzw. 14 gelöst.

Erfindungsgemäß umfasst das Verfahren zur Detektion von Rotorblatt-Schäden dabei Analyseschritte, welche ausschließlich im Zeitbereich durchgeführt werden.

Um eine Aussage über den Zustand eines Rotorblattes treffen zu können, werden zunächst die Vibrationen wenigstens eines Rotorblattes mit Hilfe wenigstens eines Beschleunigungs-Sensors bei einer Abtast-Frequenz von vorzugsweise wenigstens 5 kHz besonders bevorzugt 10kHz gemessen und als Messwerte an eine Analyseeinheit weitergegeben. In der Analyseeinheit werden dann zunächst Ereignis-Zeitintervalle erfasst, in denen die Amplitude von Messwerten ständig oberhalb eines vorher bestimmten Schwellwertes liegt. Diese Ereignis-Zeitintervalle werden gezählt. In einem nachfolgenden Schritt wird die Anzahl dieser Ereignis-Zeitintervalle mit wenigstens einem Schwellwert für die Anzahl von Ereignis-Zeitintervallen in wenigstens einem vorher bestimmten Analysezeitintervall verglichen. Liegt die Anzahl der gezählten Ereignis-Zeitintervalle oberhalb des Schwellwertes dieses Analysezeitintervalls, wird eine Fehlermeldung für das analysierte Rotorblatt ausgegeben.

Vorzugsweise werden die Messwerte vor der Erfassung von Ereignis-Zeitintervallen durch einen Tiefpass-Filter geleitet, um die nachfolgende Erfassung der Ereignis-Zeitintervalle nur auf die niederfrequenten Messwert-Anteile anzuwenden. Besonders bevorzugt wird hierfür ein Filter von 400 Hz, besonders bevorzugt von 180 Hz verwendet.

Gemäß einer Ausführungsform der Erfindung beträgt der Schwellwert zur Erfassung von Ereignis-Zeitintervallen zwischen 1,2 m/s² und 1,6m/s² und vorzugsweise 1,4 m/s². Gemäß einer weiteren Ausführungsform der Erfindung handelt es sich bei dem Schwellwert zur Erfassung von Ereignis-Zeitintervallen nicht um einen festen Schwellwert, sondern um einen dynamischen Schwellwert. Wird ein dynamischer Schwellwert verwendet, so liegt dieser bei vorzugsweise dem 5 fachen Wert der gemittelten Vibrations-Messwerte des Analysezeitintervalls eines vorangehenden Zeitabschnitts von vorzugsweise 10 Sekunden und besonders bevorzugt bei dem 10 fachen Wert der gemittelten Vibrations-Messwerte eines vorangehenden Zeitabschnitts von vorzugsweise 10 Sekunden oder bei dem 10 fachen Wert der gemittelten Vibrations-Messwerte des vorangehenden Analysezeitintervalls. Gemäß einer weiteren Ausführungsform entspricht der dynamische Schwellwert dem vielfachen Wert der gemittelten Vibrations-Messwerte eines vorangehenden Zeitabschnitts von vorzugsweise 10 Sekunden oder des vorangehenden Analysezeitintervalls, wobei es sich um einen vorherbestimmten Faktor von zwischen 5 und 10 handelt.

Vorzugsweise beträgt der Analysezeitintervall zwischen drei und sieben, besonders bevorzugt zwischen 4 und 6 Minuten.

Gemäß einer weiteren Ausführungsform ist der Schwellwert für die Anzahl der gezählten Ereignis-Zeitintervalle so gewählt, dass er zwischen dem 0,3 fachen und dem 0,5 fachen Wert der Rotationen der Windturbine in dem Analysezeitintervall liegt und vorzugsweise dem 0,4 fachen Wert der Rotationen der Windturbine in dem Analysezeitintervall entspricht.

Entspricht der Analysezeitintervall beispielsweise 5 Minuten, so entspricht der Schwellwert für die Anzahl der gezählten Ereignis-Zeitintervalle vorzugsweise 10, wenn die Rotationsgeschwindigkeit der Windturbine 5 Umdrehungen pro Minute (U/min) beträgt.

Werden dementsprechend innerhalb eines Analysezeitraums von 5 Minuten bei einer Rotationsgeschwindigkeit der Windturbine von 5 U/min mehr als 10 Ereignis-Zeitintervalle gezählt, wird eine Fehlermeldung ausgegeben.

Gemäß einer weiteren Ausführungsform der Erfindung wird eine Fehlermeldung nur dann ausgegeben, wenn die Anzahl der in einem Analysezeitintervall gezählten Ereignis-Zeitintervalle nicht nur oberhalb des besagten Schwellwertes, sondern gleichzeitig auch unterhalb eines zweiten, oberen Schwellwertes liegt. Der obere Schwellwert für die Anzahl der gezählten Ereignis-Zeitintervalle wird vorzugsweise so gewählt, dass er zwischen dem 2,5 fachen und dem 3,5 fachen Wert der Rotationen der Windturbine in dem Analysezeitintervall und besonders bevorzugt dem 3 fachen Wert entspricht.

Entspricht der Analysezeitintervall beispielsweise 5 Minuten, so entspricht der Schwellwert für die Anzahl der gezählten Ereignis-Zeitintervalle vorzugsweise 75, wenn die Rotationsgeschwindigkeit der Windturbine 5 U/min beträgt.

Gemäß einer weiteren Ausführung der Erfindung handelt es sich bei dem Schwellwert/den Schwellwerten für die Anzahl der gezählten Ereignis-Zeitintervalle in einem Analysezeitintervall nicht um feste Werte, sondern um dynamische Werte, welche in Abhängigkeit von der im Analysezeitintervall gemessenen Anzahl an Rotationen angepasst wird/ werden.

Gemäß einer weiteren Ausgestaltung der Erfindung werden die zeitlichen Abstände zwischen den im Analysezeitintervall erfassten Ereignis-Zeitintervallen erfasst und einer weiteren Analyse unterzogen: Sollte der zeitliche Abstand zweier aufeinander folgender Ereignis-Zeitintervalle kleiner sein, als der mittlere zeitliche Abstand aufeinander folgender Ereignis-Zeitintervalle im Analysezeitintervall und eine Differenz zwischen dem zeitlichen Abstand zweier aufeinander folgender Ereignis-Zeitintervalle und dem mittleren zeitlichen Abstand aufeinander folgender Ereignis-Zeitintervalle vom Betrag her größer sein, als ein vorgegebener Schwellwert, so werden diese Ereignis-Zeitintervalle nicht gezählt oder es wird der Schwellwert für die Anzahl der Ereignis-Zeitintervalle im Analysezeitintervall um einen Zähler nach oben angepasst.

Gemäß einer weiteren Ausführungsvariante wird die Dauer eines Ereignis-Zeitintervalls erfasst und mit einem vorgegebenen Schwellwert für die Dauer von Ereignis-Zeitintervallen verglichen. Liegt die erfasste Dauer eines Ereignis-Zeitintervalls unterhalb dieses Schwellwertes, wird dieser Ereignis-Zeitintervall nicht gezählt. Vorzugsweise beträgt ein solcher Schwellwert zwischen 0,1 und 0,3 Sekunden.

Überraschender Weise hat sich gezeigt, dass Vibrationen, die durch einen Rotorblatt-Schaden hervorgerufen werden, besonders häufig dann auftreten, wenn ein Rotorblatt gerade an der 12 Uhr Position vorbeigezogen ist. Dementsprechend werden vorzugsweise nur solche Ereignis-Zeitintervalle gezählt, welche während der Stellung eines Rotorblattes zwischen der 12:00 Uhr Position und der 6:00 Uhr Position erfasst werden.

In diesem Falle müssen allerdings die Schwellenwerte für die Anzahl der erfassten Ereignis-Zeitintervall im Analysezeitintervall reduziert werden, da - wenn auch statistisch nicht so häufig - Vibrationen, die durch Beschädigung eines Rotorblattes hervorgerufen werden, auch in einer Stellung des Rotorblattes zwischen der 6:00 Uhr Position und der 12:00 Uhr Position auftreten.

Es hat sich gezeigt, dass die durchschnittliche Anzahl der während einer Umdrehung erfassbaren Vibrationen, welche durch ein beschädigtes Rotorblatt hervorgerufen werden, von der Windgeschwindigkeit einerseits und dem Betriebszustand der Windturbine andererseits - "Freilauf-Modus" oder "Stromerzeugungs-Modus" - abhängen. Dies liegt daran, dass sich Brüche in Rotorblättern durch die Belastung der Windturbine und insbesondere durch das Zurückbiegen der Rotorblätter in Windrichtung teilweise schließen und so keine charakteristische Vibration zu erfassen ist.

Dementsprechend umfasst das Verfahren zur Detektion von Rotorblatt-Schäden gemäß einer weiteren Ausgestaltung der Erfindung Verfahrensschritte, welche bewirken, dass die Windturbine, deren Rotorblätter zu untersuchen sind, innerhalb des Analysezeitintervalls in einem Analysemodus bzw. Test-Modus gefahren wird. Hierbei wird die Rotationsgeschwindigkeit vor Beginn des Analysezeitintervalls auf eine vorgegebene Analyse-Rotationsgeschwindigkeit gebracht, welche vorzugsweise zwischen 4 und 6 U/min liegt und besonders bevorzugt 5 U/min beträgt. Nur geringe Schwankungsbereiche der Rotationsgeschwindigkeit sind für den Test-Modus zulässig. Um etwaige Störgeräusche durch die Pitch-Antriebe zu vermeiden, wird die Pitch-Automatik während des Analysezeitintervalls abgeschaltet bzw. die maximale Pitch-Geschwindigkeit auf ein Mindestmaß von vorzugsweise weniger als 3° pro Sekunde beschränkt.

Kann der gewünschte Analysemodus nicht eingehalten werden, so umfasst das Verfahren zur Detektion von Rotorblatt-Schäden einen Schritt zur Unterbrechung oder Beendigung der Analyse und zur Wiederaufnahme des Verfahrens zu einem späteren, geeigneteren Zeitpunkt. Der Analyse-Modus kann z. B. nicht eingehalten werden, wenn die gemessene Windgeschwindigkeit zu hoch oder zu niedrig ist.

Kann ein Analysemodus nicht durchgeführt werden, weil die Windgeschwindigkeit zu hoch ist, wird die Windturbine vorzugsweise nach Überschreiten einer vorgegebenen, zulässigen Verzögerungszeit heruntergefahren. Vorzugsweise wird ein Test dann zu einem späteren Zeitpunkt initiiert, sobald eine zulässige Windgeschwindigkeit von vorzugsweise weniger als 18 m/s herrscht.

Gemäß einer weiteren Ausgestaltung umfasst das Verfahren eine Start-Funktion, die bewirkt, dass die einzelnen Schritte des Verfahrens nicht kontinuierlich ausgeführt werden, sondern vorzugsweise nur alle 1 oder 2 Tage durchgeführt werden, d. h. der Analyse-Modus wird auch nur alle 1 oder 2 Tage gestartet. Gemäß einer weiteren Ausgestaltung wird die Turbine bei Vorliegen eines Fehlersignals heruntergefahren und das Fehlersignal an eine externe Fernwartungsstelle weitergegeben in welcher eine Fehlermeldung und/oder Messwerte über eine Ausgabeeinheit ausgegeben werden. Vorzugsweise wird die Windturbine nach einem erstmaligen herunterfahren wieder angefahren; beim Vorliegen eines Fehlersignals wird sie erneut heruntergefahren und dann nicht automatisch wieder angefahren. Das Fehlersignal wird vorzugsweise erneut an eine Fernwartungsstelle weitergeleitet.

Insbesondere wenn auf die Verfahrensschritte zur Einleitung und Aufrechterhaltung eines Analysemodus im Analysezeitintervall verzichtet wird, ist es hilfreich und deshalb gemäß weiteren Ausführungen der Erfindung vorgesehen, den Verfahrensschritten, welche im Zeitbereich durchgeführt werden, Verfahrensschritte vor-, neben- oder nachzulagern, welche im Frequenz-Bereich, im Frequenz-ZeitBereich oder in Wahrscheinlichkeits-Bereich durchgeführt werden.

Gemäß weiteren Ausgestaltungen der Erfindung ist eine oder sind mehrere der nachfolgenden Analyseschritte vorgesehen.

Vorzugsweise wird die Kurtosis des Verlaufs der Messwerte in den Ereignis-Zeitintervallen berechnet und mit vorherbestimmten Schwellwerten für die Kurtosis verglichen. Vorzugsweise werden hierzu nicht die gefilterten Messwerte, sondern die ungefilterten Messwerte verwendet.

Vorzugsweise wird ein Ereignis-Zeitintervall nicht gezählt, wenn die Kurtosis - die Gaußsche Normalverteilung wird bei einer Kurtosis von 3 angenommen - des Ereignis-Zeitintervalls größer als ein vorherbestimmter Wert zwischen 10 und 25 ist. Gemäß einer weiteren Ausführung wird die Kurtosis für einen Zeitraum von zwischen 0,3 und 0,6 Sekunden und bevorzugt von 0,5 Sekunden nach Beginn des Ereignis-Zeitintervalls berechnet, unabhängig davon, wie groß der Ereignis-Zeitintervall tatsächlich ist.

Gemäß einer weiteren Ausführungsform wird die Kurtosis nicht nur des gesamten Ereignis-Zeitintervalls oder eines Zeitraums zwischen 0,3 und 0,6 Sekunden bestimmt, sondern auch die Kurtosis vorgegebener zeitlicher Abschnitte des Ereignis-Zeitintervalls, wobei das Ereignis-Zeitintervall vorzugsweise in gleich große Abschnitte untergliedert ist oder ein solcher Abschnitt zwischen 0,03 und 0,07, bevorzugt 0,05 Sekunden beträgt. Ein Ereignis-Zeitintervall wird vorzugsweise auch dann nicht gezählt, wenn die Kurtosis eines oder mehrerer dieser Abschnitte über einem Schwellwert von zwischen 4 und 10 liegt.

Es hat sich gezeigt, dass das Verhältnis zwischen der Kurtosis einzelner Abschnitte des Ereignis-Zeitintervalls zu der Kurtosis des gesamten Ereignis-Zeitintervalls bzw. das Verhältnis der durchschnittlichen Kurtosis der Abschnitte des Ereignis-Zeitintervalls zu der Kurtosis des gesamten Ereignis-Zeitintervalls eine charakteristische Größe bei beschädigten Rotorblättern aufweist. Dementsprechend wird gemäß einer Ausgestaltung ein Ereignis-Zeitintervall nicht gezählt, wenn das Verhältnis zwischen der Kurtosis eines oder mehrerer Abschnitte des Ereignis-Zeitintervalls zu der Kurtosis des gesamten Ereignis-Zeitintervalls oder das Verhältnis der durchschnittlichen Kurtosis der Abschnitte des Ereignis-Zeitintervalls zu der Kurtosis des gesamten Zeitintervalls oder des langen Zeitintervalls über einem Schwellwert von zwischen 2,5 und 3,5 liegt. Da diese Kurtosis-Analyseschritte auch ohne die Analyseschritte im Zeitbereich ein effektives Verfahren zur Detektion von Rotorblatt-Schäden ermöglichen, stellen diese Schritte auch ohne die Analyseschritte im Zeitbereich einen selbstständigen erfinderischen Gedanken dar.

Gemäß einer weiteren Ausgestaltung ist ein Frequenz-Synchronizitäts-Verfahren den im Zeitbereich durchgeführten Verfahrensschritten vorgelagert.

Für dieses Verfahren werden die Messwerte zunächst durch einen Tiefpass-Filter und gleichzeitig durch einen Hochpass-Filter von vorzugsweise 400 Hz geleitet. Wird für die niederfrequenten Messwertanteile ein Ereignis-Zeitintervall erfasst, so wird überprüft, ob zur gleichen Zeit auch ein vorgegebener Schwellwert für die hochfrequenten Messwerteanteile festgestellt werden kann. Da sich gezeigt hat, dass beschädigte Rotorblätter besonders starke Ausschläge im niederfrequenten Frequenzbereich aufweisen, handelt es sich, wenn zeitgleich auch für die hochfrequenten Messwerteanteile ein vorgegebener Schwellwert von vorzugsweise zwischen 1_{,}4 und 3 m/s² überschritten wird, nicht um eine Vibration, welche durch ein beschädigtes Rotorblatt hervorgerufen wird und dementsprechend wird der entsprechende Ereignis-Zeitintervall nicht mitgezählt oder der Schwellwert für die Anzahl der Ereignis-Zeitintervalle wird einen Zähler nach oben gesetzt. Dieser Schwellwert für die hochfrequenten Messwertanteile ist gemäß einer Variante dynamisch, wobei der Schwellwert vorzugsweise höher ist, als der Schwellwert für die niederfrequenten Messwertanteile d. h. der Faktor, mit dem der dynamische Schwellwert auf der Grundlage der durchschnittlichen Messwerte eines vorangehenden Zeitabschnitts berechnet wird, ist bei den hochfrequenten Messwertanteile höher zu wählen, als bei den niederfrequenten Messwertanteilen.

Als weitere charakteristische Größen haben sich der Frequenzmittelwert und der quadratische Mittelwert der Frequenz (RMS) erwiesen. Dabei wird der Frequenzmittelwert mittels FFT-Verfahren (Schnelle Fourier Transformation) für den Ereignis-Zeitbereich oder vorzugsweise für einen Zeitraum von 0,5 Sekunden nach Beginn des Ereignis-Zeitintervalls unter Verwendung aller, nicht nur der gefilterten Messwertanteile, berechnet.

Für die RMS-Analyse wird der Ereignis-Zeitintervall oder der Zeitraum von 0,5 Sekunden nach Beginn des Ereignis-Zeitintervalls in vorzugsweise wenigstens drei gleich große Abschnitte unterteilt und für jeden Abschnitt der RMS Wert vorzugsweise aller Messwertanteile berechnet. Weist nicht jeder der Abschnitte in chronologischer Abfolge einen geringeren RMS-Wert auf, als der vorangehende Abschnitt, so handelt es sich nicht um Vibrationen, welche auf eine Beschädigung des Rotorblattes zurückzuführen sind, ein solcher Ereignis-Zeitintervall wird folglich nicht gezählt oder der Schwellwert für die Anzahl der Ereignis-Zeitintervalle wird einen Zähler nach oben gesetzt.

Gemäß einer weiteren Ausführungsform ist ein Komponenten-Synchronizitäts-Verfahren den im Zeitbereich durchgeführten Verfahrensschritten vorgelagert. Für dieses Verfahren wird die Tatsache ausgenutzt, dass es sehr unwahrscheinlich ist, dass ein Rotorblatt-Schaden zeitgleich in mehreren Rotorblättern einer Windturbine auftritt. Dementsprechend wird dann, wenn ein Ereignis-Zeitintervall gleichzeitig in wenigstens zwei Rotorblättern detektiert wird, dieses Ereignis-Zeitintervall nicht mitgezählt oder der Schwellwert für die Anzahl der Ereignis-Zeitintervalle wird einen Zähler nach oben gesetzt.

Gemäß einer weiteren Ausgestaltung wird ein Fehlersignal auch dann ausgegeben, wenn ein Defekt der Auswerteeinheit festgestellt wird. Ein Defekt wird vorzugsweise dadurch festgestellt, dass die Anzahl der gezählten Ereignis-Zeitintervalle in einem Analysezeitintervall null ist oder unter einen vorgegebenen Schwellwert fällt.

Einen weiteren Aspekt der Erfindung stellt eine Vorrichtung zur Überwachung von Rotorblatt-Schäden von Windturbinen dar, welche wenigstens über einen Beschleunigungs-Sensor und eine Auswerteeinheit verfügt, wobei die Auswerteeinheit dazu ausgebildet ist, zunächst Ereignis-Zeitintervalle zu erfassen, in denen die Amplitude von Messwerten ständig oberhalb eines vorher bestimmten Schwellwertes liegt, und vorzugsweise auch dazu ausgebildet ist, diese Ereignis-Zeitintervalle zu zählen und dann, wenn die Anzahl dieser Ereignis-Zeitintervalle über einem unteren Schwellwert für die Anzahl von Ereignis-Zeitintervallen und unterhalb eines oberen Schwellwertes für die Anzahl von Ereignis-Zeitintervallen in einem Analysezeitintervall liegt, eine Fehlermeldung für das analysierte Rotorblatt auszugeben.

Einen weiteren Aspekt der Erfindung stellt ein System zur Überwachung von Rotorblatt-Schäden von Windturbinen dar, welches wenigstens über die genannte Vorrichtung, eine Übertragungseinheit, einer Steuereinheit, eine Recheneinheit, eine zentrale Datenerfassungsstelle, und eine zentrale Datenausgabestelle verfügt. Dabei ist die Übertragungseinheit vorzugsweise als Gleitring oder als WLAN-Brücke ausgeführt und dazu ausgebildet, Signale und/oder Messwerte an die Steuereinheit und/oder die Recheneinheit und/oder die zentrale Datenerfassungsstelle und/oder die zentrale Datenausgabestelle weiterzuleiten. Als Übertragungseinheit können erfindungsgemäß zusätzlich zum Gleitring oder zur WLAN-Brücke auch ein Bachmann Fastbus und/oder andere Datenleiter eingesetzt sein.

Die Steuereinheit ist hierbei dazu ausgebildet, die Windturbine zu steuern. Die Recheneinheit ist im Unterschied zur Auswerteeinheit dazu ausgebildet, neben den Analyseschritten im Zeitbereich auch Frequenzbereichs-Analyseschritte und/oder Frequenz-Zeitbereichs-Analyseschritte und/oder Wahrscheinlichkeitsbereichs-Analyseschritte durchzuführen.

Die zentrale Datenerfassungsstelle ist dazu ausgebildet ist, die Messwerte und vorzugsweise auch die Fehlermeldungen abzuspeichern. Die zentrale Datenausgabestelle ist dazu ausgebildet eine Fehlermeldung zentral für mehrere Windturbinen auszugeben. Vorzugsweise weist die Datenausgabestelle zusätzlich eine Dateneingabe-Schnittstelle auf oder ist mit dieser verbunden. Über die Dateneingabe-Schnittstelle ist es vorzugsweise möglich, direkt oder indirekt auf Parameter der Recheneinheit zuzugreifen und diese für zukünftige Verfahren anzupassen.

Im Betrieb wird vorzugsweise von der Auswerteeinheit der Test-Modus für eine Windturbine initiiert und innerhalb eines vorgegebenen Analysezeitintervalls die Vibrationen eines jeweiligen Rotorblattes mit Hilfe wenigstens eines, vorzugsweise mehrerer Beschleunigungssensoren gemessen. Die Auswerteeinheit erfasst dann - nachdem die Messwerte vorzugsweise zunächst durch einen 180 Hz Tiefpassfilter gefiltert wurden, Ereignis-Zeitintervalle, in denen die Messwerte ständig über einem vorgegebenen Schwellwert von vorzugsweise 1,4 m/s² liegen. Wird ein Ereignis-Zeitintervall erfasst, leitet die Auswerteeinheit die Messwerte, welche innerhalb des Ereignis-Zeitintervalls liegen - hier jedoch vorzugsweise nicht die gefilterten Werte, sondern das gesamte Spektrum - an die Recheneinheit weiter. In der Recheneinheit werden dann vorzugsweise zumindest die weiter oben beschriebene Kurtosis-Analyse, die weiter oben beschriebene Analyse der mittleren Frequenz mittels FFT-Verfahren und die weiter oben beschriebene RMS-Analyse durchgeführt. Nur diejenigen Ereignis-Zeitintervalle werden gezählt, welche diesen Analysen genügen. Schließlich wird überprüft, ob die gezählten Ereignis-Zeitintervalle zwischen den weiter oben beschriebenen Schwellwerten für die Anzahl von Ereignis-Zeitintervallen in einem Analysezeitintervall liegen. Ist dies der Fall, wird eine Fehlermeldung ausgegeben.

Weitere Einzelheiten der Erfindung gehen aus den Zeichnungen anhand der Beschreibung hervor.

In den Zeichnungen zeigt:
- Fig. 1: ein Flussdiagramm einer ersten Ausführung des erfindungsgemäßen Verfahrens mit einer Zeitbereichs-Analyse,
- Fig. 2: ein Flussdiagramm einer zweiten Ausführung des efindungsgemäßen Verfahrens mit Wahrscheinlichkeits- und Frequenzanalysen, welche der Zeitbereichs- Analyse vorgelagert sind,
- Fig. 3: ein Flussdiagramm einer dritten Variante des erfindungsgemäßen Verfahrens mit einem Analyse-Modus für die Windturbine,
- Fig. 4: eine Prinzip-Skizze für die Implementierung des Verfahrens gemäß Fig. 1 in eine Vorrichtung und ein System zur Überwachung von Windturbinen,
- Fig. 5: eine Prinzip-Skizze für die Implementierung des Verfahrens gemäß Fig. 1 und/oder Fig. 2 in eine Vorrichtung und ein System zur Überwachung von Windturbinen,
- Fig. 6: eine Prinzip-Skizze für eine implementierung des Verfahrens gemäß Fig. 1 und/oder Fig. 2 in eine Vorrichtung und ein erweitertes System zur Überwachung von Windturbinen.

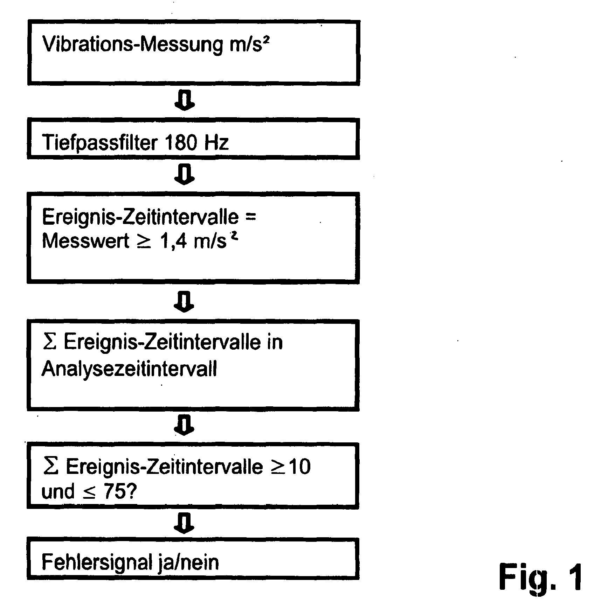

In Figur 1 sind die wesentlichen Schritte des erfindungsgemäßen Verfahrens zur Überwachung von Windturbinen 3 dargestellt. Um jedes einzelne Rotorblatt einer Windturbine 3 auf mögliche Rotorblatt-Schäden untersuchen zu können, sind diese mit jeweils wenigstens einem Beschleunigungs-Sensor 10 ausgestattet, welcher die Vibrationen der jeweiligen Rotorblätter mit einer Abtast-Geschwindigkeit von wenigstens 10 kHz misst. Die Messergebnisse werden daraufhin durch einen Tiefpass-Filter von 180 Hz geleitet.

Zeitintervalle, in denen die Messwerte ständig höher als 1,4 m/s² sind, werden als Ereignis-Zeitintervalle erfasst. Innerhalb eines Analysezeitintervalls von 5 Minuten werden die Ereignis-Zeitintervalle gezählt. Entspricht die Anzahl der Ereignis-Zeitintervalle im Analysezeitintervall einem Wert zwischen 10 und 75, wird ein Fehlersignal ausgegeben.

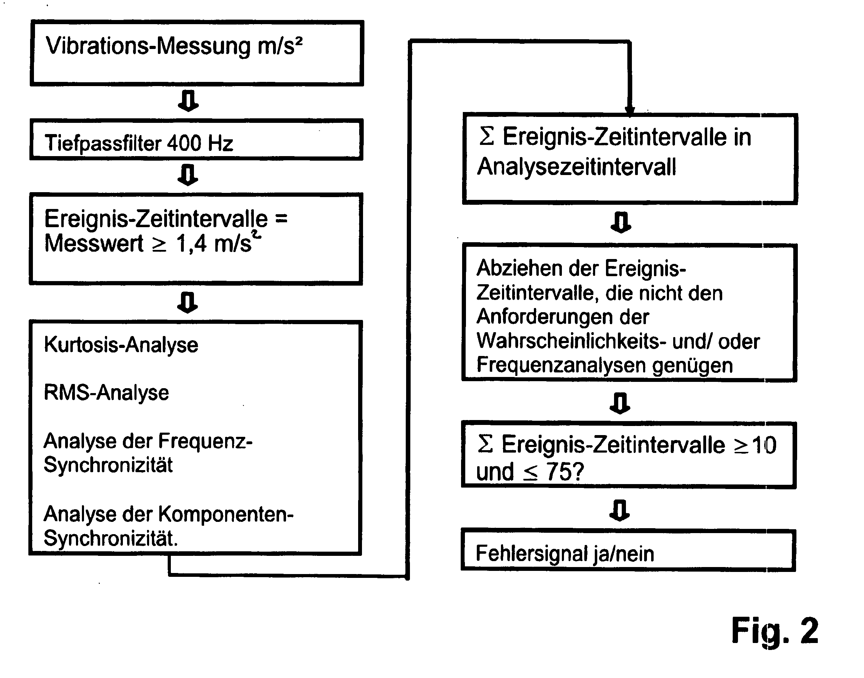

Figur 2 zeigt eine erweiterte Ausführung des erfindungsgemäßen Verfahrens, welche neben den Analyseschritten im Zeitbereich weitere Analyseschritte im Wahrscheinlichkeitsbereich und im Frequenz-Zeitbereich umfasst. Wie auch bei dem in Figur 1 dargestellten Verfahren, werden zunächst die Vibrationen eines Rotorblattes durch mehrere Beschleunigungs-Sensoren oder durch einen Beschleunigungs-Sensor gemessen. Im Gegensatz zu dem in Figur 1 dargestellten Verfahren, werden die Messwerte nun durch einen Tiefpass-Filter von 400 Hz geleitet. Dementsprechend wird bei dieser Ausführung weniger gefiltert, als bei der Verfahrens-Variante nach Figur 1. Als nächstes werden die Zeitintervalle, in denen die Vibrationen größer als 1,4 m/s² sind, als Ereignis-Zeitintervalle erfasst.

Durch eine Kurtosis-Analyse wird die Abweichung der Messwerte in den Ereignis-Zeitintervallen von der Gaußschen Normalverteilung festgestellt. Nur wenn die ermittelte Kurtosis einen Wert von weniger als 25 aufweist, wird der erfasste Ereignis-Zeitintervall gezählt.

Gleichzeitig wird für 3 gleich große Abschnitte jedes Ereignis-Zeitintervalls der quadratische Mittelwert (RMS) über die Frequenzen gebildet und überprüft, ob der ermittelte Wert des zweiten bzw. dritten Abschnittes geringer ausfällt, als der Wert des chronologisch früheren Abschnittes. Nur wenn dies der Fall ist, wird der entsprechende Ereignis-Zeitintervall gezählt.

Daraufhin wird die Mittlere Frequenz im Ereignis-Zeitintervall mittels FFT-Verfahren berechnet und geprüft, ob der ermittelte Wert unterhalb eines vorgegebenen Schwellwert liegt. Nur wenn dies der Fall ist, wird der Ereignis-Zeitintervall gezählt.

Daraufhin wird eine Analyse der Frequenz-Synchronizität durchgeführt. Hierfür ist es notwendig, dass neben einem Tiefpass-Filter die Messwerte anfangs auch durch einen Hochpass-Filter geleitet werden, denn bei der Frequenz-Synchronizität wird überprüft, ob zum Zeitpunkt eines erfassten Ereignis-Zeitintervalls auch ein Schwellwert von 3 m/s² für die hochfrequenten Messwert-Anteile vorliegt. Ist dies der Fall, ist davon auszugehen, dass es sich bei den Vibrationen nicht um solche handelt, für die Rotorblatt-Schäden ursächlich sind. Infolgedessen wird ein solcher Ereignis-Zeitintervall nicht gezählt.

Als nächstes wird eine Analyse der Komponenten-Synchronizität durchgeführt. Sollte zeitgleich mit dem erfassen eines Ereignis-Zeitintervalls bei einem Rotorblatt auch bei einem weiteren Rotorblatt ein Ereignis-Zeitintervall erfasst werden, so ist davon auszugehen, dass es sich nicht um Vibrationen handelt, welche auf ein beschädigtes Rotorblatt zurückzuführen sind. Dementsprechend wird auch ein solcher Ereignis-Zeitintervall nicht gezählt. Alle weiteren erfassten Ereignis-Zeitintervalle werden innerhalb des Analysezeitintervall von 5 Minuten gezählt. Liegt die ermittelte Anzahl von Ereignis-Zeitintervallen in dem Analyse Zeitintervall zwischen 10 und 75, wird ein Fehlersignal ausgegeben.

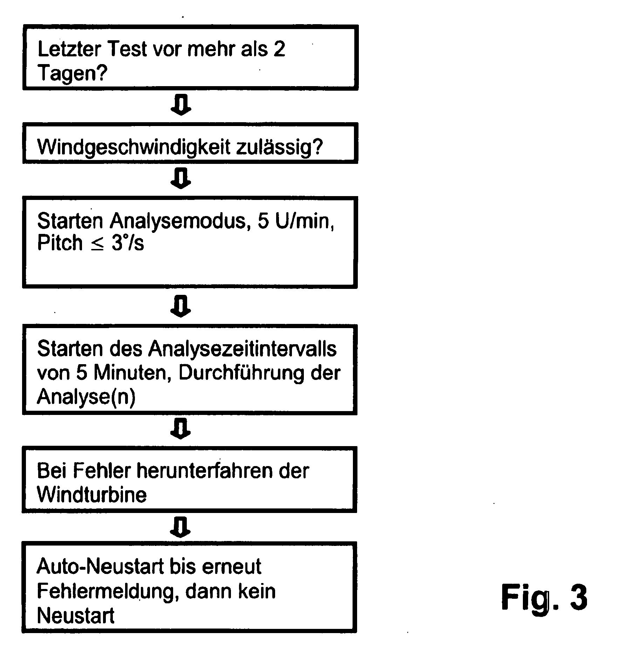

Figur 3 zeigt eine weitere Variante des Verfahrens, welche zusätzlich zu der in Figur 1 oder 2 gezeigten Variante noch über Schritte zur Initiierung eines Analysemodus und zur Aufrechterhaltung eines Analysemodus während des Analysezeitintervalls verfügt. Zunächst wird bei dieser Variante geprüft, wie lange der letzte Test zur Überprüfung der Wind Turbine auf Rotorblatt-Schäden zurückliegt. Liegt der letzte Test mehr als zwei Tage zurück und wenn gleichzeitig die 10 minütige, durchschnittliche Windgeschwindigkeit zwischen 18 m/s und 3,5 m/s liegt, wird der Analysemodus initiiert. Dies bedeutet, dass die Windturbine auf eine Rotationsgeschwindigkeit von 5 U/min gebracht wird und eine Pitch-Geschwindigkeiten von unter 3° pro Sekunde eingehalten wird. Die Windturbine erzeugt im Analysemodus keinen Strom. Ist aufgrund der Wetter-Bedingungen eine Pitch-Geschwindigkeit von mehr als 3° pro Sekunde notwendig, so wird der Test abgebrochen und zu einem späteren Zeitpunkt wiederholt. Kann der Analysemodus während des Analysezeitintervalls aufrechterhalten werden, werden die Analysen gemäß Figur 1 oder Figur 2 durchgeführt und eine Fehlermeldung dann ausgegeben, wenn die Anzahl der gezählten Ereignis-Zeitintervalle zwischen 10 und 75 liegt. Ist dies der Fall, wird die Windturbine zunächst heruntergefahren, dann jedoch durch einen Auto-Neustart wieder angefahren und solange betrieben, bis eine erneute Fehlermeldung ausgegeben wird. Wird die Windturbine daraufhin ein zweites Mal heruntergefahren, wird sie nicht über einen Auto-Neustart wieder angefahren.

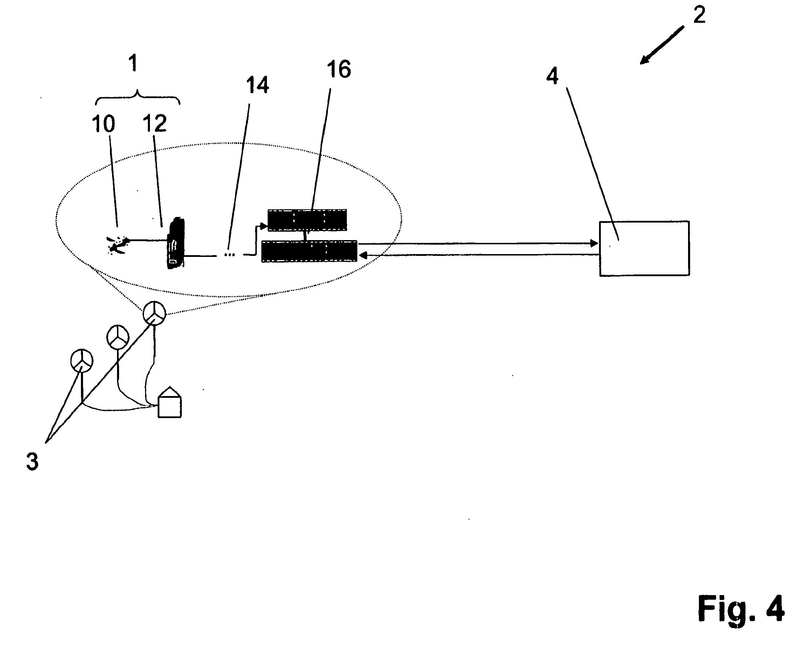

Figur 4 zeigt die Implementierung des Verfahrens gemäß Figur 1 in eine Vorrichtung 1 und ein System 2 zur Überwachung von Windturbinen 3. die Vorrichtung 1 umfasst dabei für jedes Rotorblatt einen Sensor 10 und eine Auswerteeinheit 12. Das System 2 zur Überwachung von Windturbinen 3 umfasst die Vorrichtung 1, einen Gleitring 14, eine Steuereinheit 16 zur Steuerung einer Windturbine 3 und eine zentrale Datenausgabestelle 4. Sobald die Auswerteeinheit 12 erkennt, dass der letzte Test mehr als zwei Tage zurückliegt, sendet sie über den Gleitring 14, welcher zur Übertragung von Daten und Signalen ausgebildet ist, ein Signal an die Steuereinheit 16, woraufhin diese einen Analyse-Modus für die entsprechende Windturbine 3 initiiert und für die Dauer des Analysezeitintervalls aufrechterhält.

Während des Analysezeitintervalls messen die Sensoren 10 die Vibrationen der jeweiligen Rotorblätter und geben die Messwerte an die Auswerteeinheit 12 weiter. In der Auswerteeinheit 12 wird daraufhin das Analyseverfahren gemäß Figur 1 ausgeführt. Wird ein Fehlersignal ausgegeben, so sendet die Auswerteeinheit 12 über den Gleitring 14 an die Steuereinheit 16 ein Abschalte-Signal, woraufhin die Windturbine entweder sofort oder nach einer kurzen Zeit heruntergefahren wird.

Gleichzeitig wird das Fehlersignal und vorzugsweise ebenfalls die von den Sensoren 10 gemessenen Messwerte an die zentrale Datenausgabestelle 4 weitergeleitet. Über die Datenausgabestelle werden die Techniker, welche für die Überwachung der Windturbinen zuständig sind alarmiert und können vorzugsweise die aktuellen Vibrationen überwachen und besonders bevorzugt mittels eines Rücksendesignals ein Abschalten der Windturbine 3 noch verhindern. Wenn die Windturbine 3 aufgrund eines Fehlers heruntergefahren worden ist, sendet die Auswerteeinheit 12 ein Auto-Neustart-Signal über den Gleitring 14 an die Steuereinheit 16 um die Windturbine 3 erneut zu starten. Bei erneutem Auftreten und Erfassen eines Fehlers wird die Windturbine 3 wieder heruntergefahren und muss dann manuell wieder gestartet werden. Ein Auto-Neustart findet nicht statt.

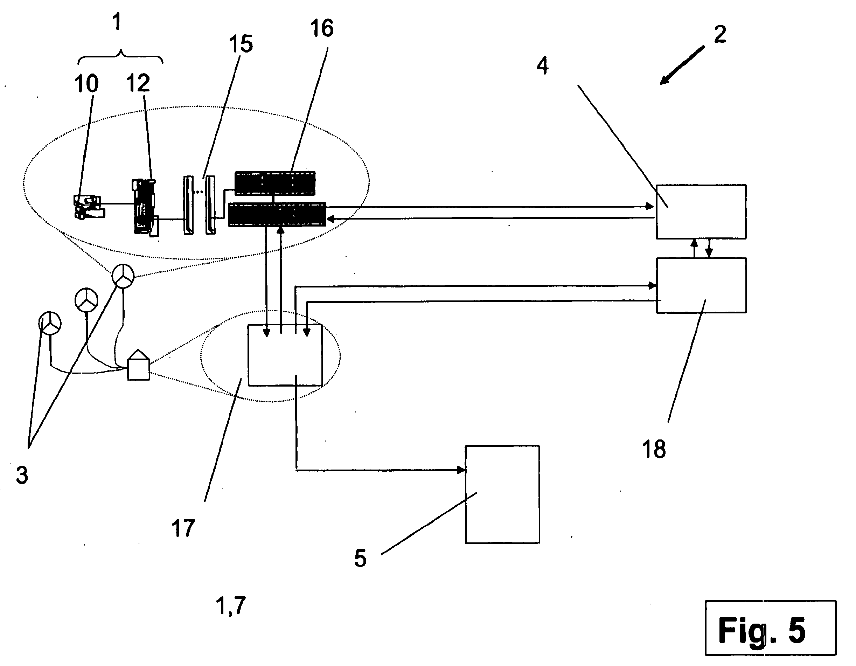

Figur 5 zeigt eine weitere Ausführungsform des erfindungsgemäßen Systems 2 zur Überwachung von Windturbinen 3. Im Gegensatz zu der Ausführungsform gemäß Figur 4 werden die von der Auswerteeinheit 12 ausgegebenen Signale und weitergeleitete Messwerte nicht über einen Gleitring 14, sondern über eine WLAN-Brücke 15 an die Steuereinheit 16 und an eine Recheneinheit 17 weitergeleigt. Da die Recheneinheit 17 über eine höhere Rechenleistung verfügt, als die Auswerteeinheit 12, können in dieser die über die Auswerteeinheit 12 und die WLAN-Brücke 15 weitergeleiteten Messwerte mit Hilfe der erweiterten Analyseschritte gemäß Figur 2 ausgewertet werden. In diesem Falle reagiert die Steuereinheit 16 in Bezug auf Signale zum Herunterfahren einer Windturbine 3 nur auf Signale, welche von der Recheneinheit 17 ausgegeben werden, da diese auf einer genaueren Analyse der Messdaten basieren. Die Signale zur Initiierung und Aufrechterhaltung des Analyse-Modus und alle weiteren Signale - bis auf das Fehlersignal und das Abschalte-Signal - kommen jedoch weiterhin von der Auswerteeinheit 12. Die Auswerteeinheit erfasst darüber hinaus weiterhin die Ereignis-Zeitintervalle und leitet nur diejenigen Messwerte weiter, welche innerhalb des Ereignis-Zeitintervalls gemessen wurden, hier jedoch nicht nur die gefilterten Messwerte, sondern das gesamte Spektrum. Für diese Ereignis-Zeitintervalle wird dann in der Recheneinheit untersucht, ob Kriterien vorliegen, welche zeigen, dass ein erfasster Ereignis-Zeitintervall nicht auf einen Rotorblatt-Schaden zurückzuführen ist. Ist dies der Fall, wird dieser Ereignis-Zeitraum nicht gezählt. Am Ende aller Analyse-Verfahren wird die Anzahl der der gezählten Ereignis-Zeitintervalle mit den Schwellwerten 10 und 75 - sofern es sich um einen Analysezeitraum von 5 Minuten bei 5 U/min handelt-verglichen und ein Fehlersignal ausgegeben, wenn die gezählten Ereignis-Zeitintervalle zwischen diesen Werten liegen. Wird also von der Recheneinheit 17 ein Fehlersignal ausgegeben, so wird die Windkraftanlage 3 heruntergefahren. Gleichzeitig wird das Fehlersignal und die Messwerte an eine zentrale Datenerfassungsstelle 5 weitergeleitet und dort abgespeichert.

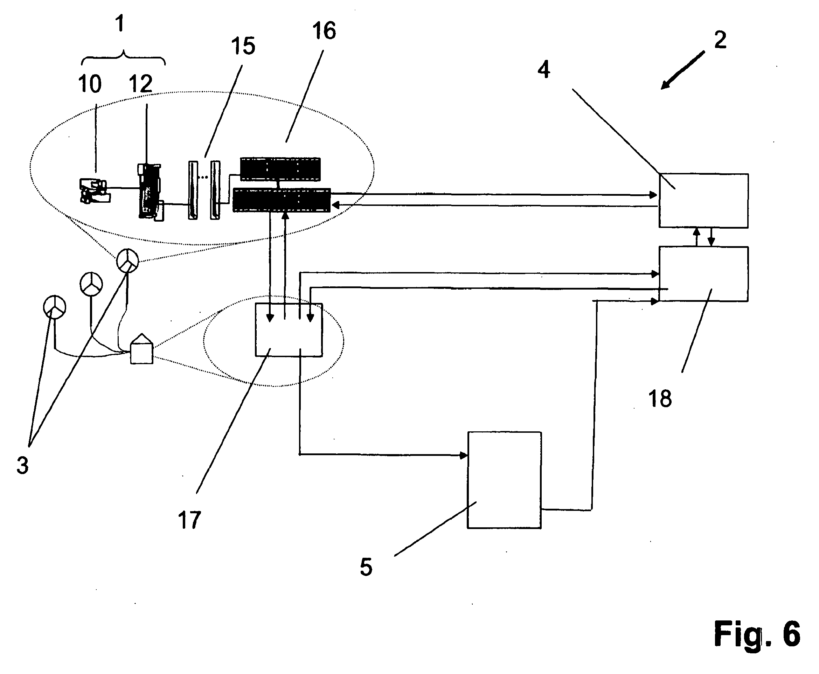

Figur 6 zeigt eine weitere Ausführungsform des erfindungsgemäßen Systems 2 zur Überwachung von Windturbinen 3. Im Gegensatz zu der Ausführungsform gemäß Figur 5 können bei dieser Ausführungsform über eine mit der Datenausgabestelle 4 verbundene Dateneingabe-Schnittstelle 18 sowohl die aktuellen, als auch ältere Messwerte von der Recheneinheit 17 und/oder von der Datenerfassungsstelle 5 angefordert werden und werden dann mit Hilfe der Datenausgabestelle 4 ausgegeben. Über die Dateneingabe-Schnittstelle 18 ist es auch möglich, direkt oder indirekt auf Parameter der Recheneinheit 17 zuzugreifen und diese für zukünftige Tests anzupassen.

Die in den beschriebenen Ausführungsbeispielen offenbarten Merkmalskombinationen sollen nicht limitierend auf die Erfindung wirken, vielmehr sind auch die Merkmale der unterschiedlichen Ausführungen miteinander kombinierbar.

### Bezugszeichenliste:

- 1: Vorrichtung zur Überwachung von Windturbinen
- 2: System zur Überwachung von Windturbinen
- 3: Windturbine(n)
- 4: Ausgabeeinheit
- 5: Datenerfassungseinheit
- 10: Sensor(en)
- 12: Auswerteeinheit
- 14: Gleitring
- 15: WLAN-Brücke
- 16: Steuereinheit
- 17: Recheneinheit
- 18: Dateneingabe-Schnittstelle

## Patentansprüche

1. Verfahren zur Feststellung von Rotorblatt-Schäden einer Windturbine, umfassend wenigstens die folgenden Zeitbereichs-Analyse-Schritte:
- Messen der Vibrationen eines Rotorblattes mit Hilfe eines Beschleunigungssensors,
- Erfassung von Ereignis-Zeitintervallen, in denen die Amplituden der Messwerte ständig einen Schwellwert übersteigen,
- Erfassung der Anzahl dieser Ereignis-Zeitintervalle in zumindest einem vorherbestimmten Analysezeitintervall,
- Senden eines Fehlersignals, wenn die ermittelte Anzahl von Ereignis-Zeitintervallen über einem vorherbestimmten Schwellwert für einen vorherbestimmten Analysezeitintervall liegt.

2. Verfahren nach einem der Ansprüche 1, **dadurch gekennzeichnet, dass** ein Fehlersignal nur dann gesendet wird, wenn die ermittelte Anzahl von Ereignis-Zeitintervallen auch unter einem vorherbestimmten oberen Schwellwert für einen vorherbestimmten Analysezeitintervall liegt.

3. Verfahren nach Anspruch 1, **dadurch gekennzeichnet, dass** die Windturbine während des Analysezeitintervalls in einem Test-Modus gefahren wird, in dem sich die Windturbine in einem Freilauf-Modus befindet und in dem die Rotationsgeschwindigkeit in einem im normalen Betriebsfall nicht eingehaltenen Schwankungsbereich gehalten wird und die Pitch-Geschwindigkeit unterhalb eines, im normalen Betriebsfall nicht eingehaltenen Maximalwertes gehalten wird.

4. Verfahren nach Anspruch 3, **dadurch gekennzeichnet, dass** nur Vibrationen von weniger als 400 Hz, vorzugsweise weniger als 180 Hz zur Erfassung der Ereignis-Zeitintervalle verwendet werden.

5. Verfahren nach einem der vorangehenden Ansprüche, **dadurch gekennzeichnet, dass** der Schwellwert zur Erfassung der jeweiligen Ereignis-Zeitbereichs ein Wert zwischen 1,2 und 1,6 m/s² vorzugsweise zwischen 1,3 und 1,5 m/s² ist.

6. Verfahren nach einem der Ansprüche 1 bis 4, **dadurch gekennzeichnet, dass** es sich bei dem Schwellwert zur Erfassung der jeweiligen Ereignis-Zeitbereiche um einen dynamischen Schwellwert handelt, welcher einem Wert zwischen dem 5 und dem 15 fachen, der gemittelten Vibrations-Messwerte eines vorangehenden, vorherbestimmten Zeitintervalls entspricht.

7. Verfahren nach einem der vorangehenden Ansprüche, **dadurch gekennzeichnet, dass** ein Ereignis-Zeitintervall nicht gezählt wird, wenn seine zeitliche Länge unter einem vorgegebenen Schwellwert liegt.

8. Verfahren nach einem der vorangehenden Ansprüche, **dadurch gekennzeichnet, dass** den Zeitbereichs-Analyseschritten Frequenzbereichs-Analyseschritte und/oder Frequenz-Zeitbereichs-Analyseschritte und/oder Wahrscheinlichkeitsbereichs-Analyseschritte vor- neben- oder nachgelagert sind.

9. Verfahren nach einem der vorangehenden Ansprüche, **dadurch gekennzeichnet, dass** ein Ereignis-Zeitintervall nicht mitgezählt wird, wenn die Kurtosis des Verlaufs der Messwerte im Ereignis-Zeitintervall oberhalb eines vorherbestimmten Schwellwertes liegt.

10. Verfahren nach einem der vorangehenden Ansprüche, **dadurch gekennzeichnet, dass** ein Ereignis-Zeitintervall nicht gezählt wird, wenn die RMS-Werte mehrerer aufeinander folgender zeitlicher Abschnitte eines Ereignis-Zeitintervalls nicht stetig in chronologischer Reihenfolge sinken.

11. Verfahren nach einem der vorangehenden Ansprüche, **dadurch gekennzeichnet, dass** ein Ereignis-Zeitintervall nicht mitgezählt wird, wenn zur gleichen Zeit an einem zweiten Rotorblatt der Windturbine ein Ereignis-Zeitintervall erfasst wird.

12. Vorrichtung (1) zur Überwachung von Rotorblatt-Schäden von Windturbinen (3) mit wenigstens einem Beschleunigungs-Sensor (10) und einer Auswerteeinheit (12), wobei die Auswerteeinheit (12) zur Durchführung eines Verfahrens nach Anspruch 1 ausgebildet ist.

13. Vorrichtung (1) zur Überwachung von Rotorblatt-Schäden von Windturbinen (3) gemäß Anspruch 12, **dadurch gekennzeichnet dass** die Auswerteeinheit (12) dazu ausgebildet ist, eine Routine zur Initiierung eines Test-Modus auszuführen und ein entsprechendes Signal an eine Steuereinheit (16) der Windturbine (3) ausgibt.

14. System (2) zur Überwachung von Rotorblatt-Schäden von Windturbinen (3) mit wenigstens einer Vorrichtung (1) gemäß Anspruch 12, einer Übertragungseinheit (14, 15), einer Steuereinheit (16) zur Steuerung einer Windturbine (3), einer Recheneinheit (17), welche dazu ausgebildet ist, ein Verfahren gemäß Anspruch 8 auszuführen, einer zentralen Datenerfassungsstelle (5), welche dazu ausgebildet ist, die Messwerte und Fehlermeldungen abzuspeichern und einer zentralen Datenausgabestelle (4).

15. System (2) zur Überwachung von Rotorblatt-Schäden von Windturbinen (3) gemäß Anspruch 14, **dadurch gekennzeichnet, dass** die Datenausgabestelle (4) mit einer Dateneingabe-Schnittstelle (18) verbunden ist, über die es möglich ist, direkt oder indirekt auf Parameter der Recheneinheit (17) zuzugreifen und diese für zukünftige Verfahren anzupassen.

## Claims

1. A method for determining damage to rotor blade of a wind turbine, comprising at least the following time-domain-analysis steps:
- Measuring the vibrations of a rotor blade by means of an acceleration sensor,
- Obtaining event-time intervals, in which the amplitudes of the measurements steadily exceed a threshold,
- Obtaining the number of these event-time intervals in at least a predetermined analysis time interval,
- Sending an error signal, when the obtained number of the event-time intervals is above a predetermined threshold for a predetermined analysis time interval.

2. A method according to claim 1, **characterized in that** an error signal is sent only when the determined number of the event-time intervals is also under a predetermined upper threshold for a predetermined analysis time interval.

3. A method according to claim 1, **characterized in that** during the analysis time interval, the wind turbine is operated in a test mode, in which the wind turbine is in a free wheel mode and in which the rotary speed is kept in a variation range which is not maintained in the normal operation case, and the pitch speed is kept below a maximum value which is not maintained in the normal operation case.

4. A method according to claim 3, **characterized in that** only vibrations less than 400 Hz, preferably less than 180 Hz are used for obtaining the event-time intervals.

5. A method according to any one of the proceeding claims, **characterized in that** the threshold for obtaining each event-time range is a value between 1.2 and 1.6 m/s2 preferably between 1.3 and 1.5 m/s2.

6. A method according to any one of claims 1 to 4, **characterized in that** the threshold for obtaining each event-time range is related to a dynamic threshold, which corresponds to a value between 5 and 15 times of the average measurements of the vibration of a previous, predetermined time interval.

7. A method according to any one of the proceeding claims, **characterized in that** an event-time interval is not counted, when its time length is below a given threshold.

8. A method according to any one of the proceeding claims, **characterized in that** analysis method steps in frequency domain, in frequency-time domain and/or in probability domain are located before, besides, and after the method steps in time domain.

9. A method according to any one of the proceeding claims, **characterized in that** an event-time interval is not counted, when the kurtosis of the curve of the measurements in the event-time interval is above a predetermined threshold.

10. A method according to any one of the proceeding claims, **characterized in that** an event-time interval is not counted, when the RMS values of several successive time periods of a event-time interval do not decrease steadily in chronological order.

11. A method according to any one of the proceeding claims, **characterized in that** an event-time interval is not counted, when an event-time interval is obtained on a second rotor blade of the wind turbine at the same time.

12. A device (1) for monitoring damage to rotor blade of wind turbines (3) with at least one acceleration sensor (10) and an analyzing unit (12), wherein the analyzing unit (12) is configured to perform a method according to claim 1.

13. A device (1) for monitoring damage to rotor blade of wind turbines (3) according to claim 12, **characterized in that** the analyzing unit (12) is configured to perform a routine for initiating a test mode and to output a corresponding signal to a control unit (16) of the wind turbine (3).

14. A system (2) for monitoring the damage to rotor blade of wind turbines (3) with at least one device (1) according to claim 12, a transmitting unit (14, 15), a control unit (16) for controlling a wind turbine (3), a computing unit (17), which is configured to perform a method according to claim 8, a central data obtaining device (5), which is configured to store the measurements and error messages, and a central data output device (4).

15. A system (2) for monitoring the damage to rotor blade of wind turbines (3) according to claim 14, **characterized in that** the data output device (4) is connected with a data input interface (18), via which, it is possible to access parameter of the computing unit (17) directly or indirectly and adapt them for future methods.

## Revendications

1. Méthode de détection du dommage des aubes d'une éolienne comprenant au minimum les étapes d'analyse temporelle suivantes:
- Mesurer les vibrations des aubes au moyen d'un accéléromètre,
- Déterminer les intervalles de temps lorsque l'amplitude dépasse de manière répétée une valeur seuil,
- Compter le nombre d'intervalle pour une période d'analyse définie au préalable,
- Envoyer un signal d'erreur lorsque le nombre d'intervalle dépasse une valeur limite pour une période d'analyse définie au préalable.

2. Méthode, selon la revendication 1, **caractérisée en ce qu**'un signal d'erreur est seulement envoyé lorsque le nombre d'intervalles compté est aussi sous une certaine valeur seuil définie pour une période d'analyse définie au préalable.

3. Méthode, selon la revendication 1, **caractérisée en ce que,** lors de la période d'analyse, l'éolienne fonctionne en mode d'essai, en roue libre, laissant la vitesse de rotation varier sur une plage de valeur qui n'est pas maintenue lors de l'opération normale de la turbine, et laissant la vitesse du système de pas sous une valeur maximum qui n'est pas maintenue en cas d'opération normale de la turbine.

4. Méthode, selon la revendication 3, **caractérisée en ce que** seules les vibrations en dessous de 400 Hz, préférablement en dessous de 180 Hz sont utilisées pour déterminer les intervalles de temps entre les événements de dépassement d'amplitude.

5. Méthode, selon toutes les revendications précédentes, **caractérisée en ce que** la valeur seuil utilisée pour définir l'intervalle de temps entre chaque dépassement d'amplitude est une valeur entre 1.2 et 1.6 m/s², préférablement entre 1.3 et 1.5 m/s².

6. Méthode, selon chacune des revendications de 1 à 4, **caractérisée en ce que** la valeur seuil, servant a obtenir chaque intervalle de temps entre les pics d'amplitude, est fonction d'une valeur seuil dynamique, qui correspond a une valeur entre 5 et 10 fois la moyenne des mesures de vibrations d'une période précédente et préalablement identifiée.

7. Méthode, selon chacune des revendications précédentes, **caractérisée en ce qu**'un intervalle de temps n'est pas compté lorsque sa durée est en-dessous d'une valeur limite.

8. Méthode, selon chacune des revendications précédentes, **caractérisée en ce que** les étapes principales de la méthode d'analyse appartiennent au domaine temporel et seulement certaines étapes de prétraitements, de calculs annexes, de post-traitements appartiennent au domaine fréquentiel, fréquentiel-temporel et/ou des probabilités.

9. Méthode, selon chacune des revendications précédentes, **caractérisée en ce que** les intervalles de temps ne sont pas comptés, lorsque le kurtosis de la courbe des mesures dans l'intervalle de temps est au-dessus d'une valeur seuil préalablement déterminée.

10. Méthode, selon chacune des revendications précédentes, **caractérisée en ce que** l' intervalle de temps n'est pas compté, quand la moyenne quadratique de plusieurs période successives d'un intervalle de temps ne décroît pas de manière constante et dans l'ordre chronologique d'apparition.

11. Méthode, selon chacune des revendications précédentes, **caractérisée en ce qu**'un intervalle de temps n'est pas compté lorsque un intervalle de temps est obtenu sur une deuxième aube de l'éolienne au même moment.

12. Un appareil (1) pour surveiller le dommage des aubes d'éoliennes (3) avec au moins un accéléromètre (10) et un dispositif d'analyse (12), configuré pour réaliser une méthode selon la revendication 1.

13. Un appareil (1) pour surveiller le dommage des aubes d'éoliennes (3), selon la revendication 12, **caractérisé en ce que** le dispositif d'analyse (12) soit configuré pour initialiser un mode d'essai et sortir le signal correspondant vers un contrôleur (16) de l'éolienne (3).

14. Un système (2) pour surveiller le dommage des aubes d'éoliennes (3) avec au moins un appareil (1) selon la revendication 12, un transmetteur (14, 15), un contrôleur (16) pour contrôler une éolienne (3), un calculateur (17), configuré pour réaliser une méthode selon la revendication 8, un système d'acquisition de données (5), configuré pour stoker les mesures et messages d'erreurs, et un système de données de sortie.

15. Un système (2) pour surveiller le dommage des aubes d'éoliennes (3) selon la revendication 14, **caractérisé en ce que** le dispositif de sortie de données (4) est connecté avec une interface d'entrée de données (18), via laquelle, il est possible d'accéder au paramètre du calculateur (17), directement ou indirectement, et les adapter pour de futures méthodes.
